Europäisches Patentamt

European Patent Office

Office européen des brevets

(19)

(11) Publication number: **0 032 629**
**B1**

(12) **EUROPEAN PATENT SPECIFICATION**

(45) Date of publication of patent specification: **11.01.84**

(51) Int. Cl.³: **B 29 D 9/00, B 32 B 27/32**

(21) Application number: **80304690.3**

(22) Date of filing: **23.12.80**

(54) Three layer film.

(30) Priority: **28.12.79 US 108281**

(43) Date of publication of application:
**29.07.81 Bulletin 81/30**

(45) Publication of the grant of the patent:
**11.01.84 Bulletin 84/2**

(84) Designated Contracting States:
**BE DE FR GB IT SE**

(56) References cited:
**EP - A - 0 009 376**
**CH - A - 572 804**
**DE - B - 1 619 233**
**DE - B - 1 704 857**
**US - A - 4 011 382**
**US - A - 4 080 138**
**US - A - 4 151 318**
**US - A - 4 187 269**

(73) Proprietor: **UNION CARBIDE CORPORATION**
**Old Ridgebury Road**
**Danbury Connecticut 06817 (US)**

(72) Inventor: **Horner, Jerome Thomas**
**37 Briarwood Lane**
**Indian Head Park Illinois (US)**
Inventor: **Anthony, John**
**1101 35th Street**
**Downers Grove Illinois (US)**
Inventor: **Fraser, William Allen**
**10 Bayard Lane**
**Princeton New Jersey (US)**

(74) Representative: **McCall, John Douglas et al,**
**W.P. THOMPSON & CO. Coopers Building Church**
**Street**
**Liverpool L1 3AB (GB)**

Courier Press, Leamington Spa, England.

# 0 032 629

## Three layer film

The invention relates to a flexible co-extruded film having three layers and adapted for forming a bag such as a trash bag.

It is known in the prior art that in the process of melt extruding certain plastics and especially polyolefins a phenomena known as melt fracture can occur at high throughput rates. This problem is more severe at relatively cooler conventional melt temperatures, for conventional narrow die gaps, and for relatively high melt viscosities.

It has now been found that low pressure, low density polyethylene exhibits melt fracture at conventional film melt extrusion conditions at conventional throughput rates. In contrast, high pressure, low density polyethylene does not exhibit melt fracture under comparable conditions.

Briefly, melt fracture is a phenomena of surface irregularities also known in the art as "shark skin". It is characterized by a series of ridges perpendicular to the flow direction. In some cases, the melt fracture results in a matt appearance and the extrudate exhibits a loss of surface gloss. In extreme cases, the melt fracture can adversely affect physical properties.

The occurrence of melt fracture for low pressure, low density polyethylene is particularly pronounced at the lower extrusion temperatures normally associated with conventional blown film extrusion. The use of a higher melt temperature could result in instabilities in the bubble which forms part of the blown film process and also presents difficulty in cooling the extrudate by conventional air cooling procedures.

The elimination of melt fracture for the melt extrusion of low pressure, low density polyethylene is of great importance because such polyethylene can be obtained economically and has been found to provide good physical properties in the form of a flexible film which is suitable for commercial use such as a trash bag.

The low pressure, low density polyethylene as used herein refers to a linear polymer having short branches and a narrow molecular weight distribution and typically exhibits a flow rate ratio of from about 25 to about 100. These polyethylenes are produced by a low pressure process such as disclosed in U.S. Patent No. 4,011,382.

The low pressure, low density polyethylene as used herein is characterized by the appearance of melt fracture during blown film melt extrusion of a single layer film at a rate of from about 4 (1.81 kg) to about 20 pounds (9.07 kg) per hour per inch (2.54 cm) of die circumference for a die gap in the range of from about 50 (1.27 mm) to about 100 mils (2.54 mm) for a process melt temperature in the range of from about 350°F (177°C) to about 470°F (243°C).

The invention relates to a flexible co-extruded three layer film comprising outer layers of high pressure, low density polyethylene and a core layer of low pressure, low density polyethylene.

In particular, the film of the invention is produced by a conventional blown film tubular extrusion process at a conventional throughput rate of from about 4 (1.81 kg) to about 25 pounds (11.34 kg) per hour per inch (2.54 cm) of die at a process temperature of from about 350°F (177°C) to about 600°F (316°C) and is free of melt fracture.

The film of the invention is produced preferably at a throughput rate of from about 4 (1.81 kg) to about 20 pounds (9.07 kg) per hour and at a process temperature of the melt in the range of from about 350° (177°C) to about 470°F (243°C).

Preferably, the film of the invention is formed into a bag by slitting one side to define a bag opening and an opposite portion defines a bag bottom with the bag side edges being formed by heat sealing.

Illustrative, non-limiting examples of the practice of the invention are set out below. Numerous other examples can readily be evolved in the light of the guiding principles and teachings contained herein. The examples given herein are intended merely to illustrate the invention and not in any sense to limit the manner in which the invention can be practiced. The parts and percentages cited herein and all through the specification unless specifically stated otherwise refer to parts by weight and percentages by weight.

The following are the test criteria used.

Tensile strength was measured by ASTM D882 method A. Load at break was reported in pounds per inch of specimen width (lbs/inch).

Tensile energy was measured by ASTM D882 method A. The energy to break the specimen is recorded as the integrated area under the load-elongation curve. The unit of measure is inch-pounds (inch-lbs) and refers to a specimen one inch wide for the given thickness being measured.

Ultimate elongation was measured by ASTM D882 method A and is the measure of the percent elongation of the specimen at failure.

Elmendorf tear was measured by ASTM D1992 and is reported in grams (gm).

Spencer impact was measured by ASTM D3420—75 procedure B and is reported in grams (gm).

Puncture toughness is a test originated to evaluate the relative resistance of a film to being punctured. There is no ASTM standard. Basically, a 3/4 inch round steel plunger is pushed through a clamped film specimen at a speed of 20 inches per minute using a modified Instron Tester. The load to

2

puncture of the film specimen is recorded in pounds (lbs) and the energy to puncture is the integrated area under the load-elongation curve and is recorded in inch-pounds (inch-lbs). For the examples given herein, the outer layers were high pressure, low density polyethylene having a density of about 0.918 grams per cubic centimeter and a melt index of about 2.1 decigrams per minute.

Melt index was determined by ASTM D-1238—Condition E—measured at 190°C and reported as grams per 10 minutes.

Flow index was determined by ASTM D-1238—Condition F—measured at 10 times the weight used in the melt index and reported as grams per 10 minutes.

Melt Flow Ratio is defined as the ratio of Flow Index divided by Melt Index.

In accordance with conventional practice, the examples were carried out using various known additives. Generally, additives include slip agents, coloring agents, antiblock agents, antioxidants, and the like.

It has been discovered that the outer layers can be as thin as about 0.18 mil (0.0046 mm) and still be effective in preventing the occurrence of melt fracture in the film of the invention. The outer layers can be as thick as about 0.35 mil (0.0089 mm) or more, but economics favor a thickness of less than about 0.35 mils (0.0089 mm) and preferably thinner. The strength of the film of the invention arises primarily from the core layer. The low pressure, low density polyethylenes used in the examples for the core layers are shown in Table I.

**TABLE I**

| Core layer | Density gm/cm$^3$ | Melt index dg/min |
|---|---|---|
| PE A | 0.920 | 2.0 |
| PE B | 0.920 | 1.0 |
| PE C | 0.920 | 3.0 |
| PE D | 0.926 | 2.0 |

Generally, the core layer has a thickness of about three times the respective outer layers. The overall thickness of the three layer film is from about 1.0 (0.025 mm) to about 3.0 mils (0.076 mm) and preferably about 1.5 mils (0.038 mm).

Example one

Tests were carried out to determine the extrusion conditions for the onset of melt fracture for various low pressure, low density polyethylenes for single layer films as a function of throughput rate, melt process temperature, and die gap. Conventional blown film processes were used.

In the art, it is conventional to state throughput rate as mass per unit time passing out of a die gap per circumferential distance for a tubular extrusion system.

For PE A (2.0 dg/min), it was found that the onset of melt fracture occurred at a throughput rate of about 2.25 pounds (1.02 kg) per hour per inch (2.54 cm) of circumference for a die gap of 30 mils (0.76 mm) at a melt process temperature of about 470°F (243°C). A smaller die gap and/or a lower temperature would have resulted in the onset of melt fracture at even a lower throughput rate.

For PE B (1.0 dg/min), it was found that the onset of melt fracture occurred at a throughput rate of about 2.0 pounds (0.91 kg) per hour per inch (2.54 cm) of circumference for a die gap of 45 mils (1.14 mm) at a melt process temperature of about 470°F (243°C).

For PE C (3.0 dg/min), it was found that the onset of melt fracture occurred at a throughput rate of about 3.5 pounds (1.59 kg) per hour per inch (2.54 cm) of circumference for a die gap of 30 mils (0.76 mm) at a temperature of about 470°F (243°C).

These tests show that low pressure, low density polyethylene would be unsuited for economical commercial operations for the production of single layer films by conventional methods because of the occurrence of melt fracture at throughput rates even at the low end of commercial interest.

Example two

Using conventional blown film processes for a tubular die gap of about 30 mils (0.76 mm) and a core layer of PE A, two three-layer films were produced. One film had outer layers of the above high pressure polyethylene each having a thickness of about 0.18 mil (0.0046 mm) and a core layer having a thickness of about 1.4 mils (0.036 mm). The throughput rate was about 5.3 pounds (2.40 kg) per hour per inch (2.54 cm) of circumference.

The other film had outer layers of the above high pressure polyethylene each having a thickness of about 0.29 mil (0.0074 mm) and a core layer of about 0.86 mil (0.022 mm). The throughput rate was about 6.5 pounds (2.95 kg) per hour per inch (2.54 cm) of circumference. For both films, no melt fracture was present.

Example three

Using conventional blown film processes, a three layer film was made. The core layer was PE D

3

and had a thickness of about 0.98 mil (0.025 mm). The high pressure polyethylene outer layers each had a thickness of about 0.26 mil (0.0066 mm). The die gap was 30 mils (0.76 mm) and the throughput rate was about 3.5 pounds (1.59 kg) per hour per inch (2.54 cm) of circumference.

No melt fracture was present.

Example four

The blown film processes of the previous examples were used to produce three multilayer films of the invention. The die gap was 30 mils (0.76 mm), the overall film thickness was about 1.5 mils (0.038 mm), and the ratio of the layer thicknesses was 1:3:1.

The core layers of the respective films A, B, and C were PE A, PE B and PE C. The outer layers were of the above high pressure polyethylene. For comparison, a control film having three layers with the core layer the same as the outer layers was made. Table 2 shows the measured properties of the films.

### TABLE 2

| Property | Film A | Film B | Film C | Control |
|---|---|---|---|---|
| Core layer | PE A | PE B | PE C | same as outside layers |
| Puncture toughness: | | | | |
| Load, lbs. | 6.8 | 7.1 | 6.6 | 7.2 |
| Energy, in-lbs. | 10.3 | 11.3 | 9.5 | 6.3 |
| Tensile strength lbs/in | | | | |
| MD | 4.5 | 5.3 | 3.6 | 5.1 |
| TD | 4.6 | 4.3 | 4.0 | 2.8 |
| Property | Film A | Film B | Film C | Control |
| Elmendorf tear gm | | | | |
| MD | 109 | 100 | 81 | 727 |
| TD | 472 | 565 | 446 | 137 |
| Spencer impact gm | 440 | 430 | 400 | 650 |
| Tensile energy in-lbs. | | | | |
| MD | 32.6 | 36.0 | 23.2 | 9.8 |
| TD | 36.1 | 32.1 | 31.2 | 21.5 |
| Ultimate elongation, % | | | | |
| MD | 500 | 500 | 390 | 130 |
| TD | 660 | 580 | 630 | 500 |

From Table 2, it can be seen that the physical properties exhibited by the three layer films of the invention were very good. None of the films showed melt fracture.

It is of particular interest that the blown film of the invention showed a surprising increase in tensile strength in the transverse direction (TD) whereas the tensile strength in the machine direction (MD) is usually the greater of the two directions for convention high pressure low density polyethylene blown film.

The strength in the transverse direction can be used in a beneficial manner to form an improved trash bag.

In accordance with conventional practice, a bag can be formed from the tubular film by slitting the tubular film along its length so that the slitted portion becomes the bag opening and the opposite portion becomes the bag bottom. The two bag side edges are defined by two continuous heat seals perpendicular to the bag bottom and the bag opening. For this bag, the TD strength is in the direction extending from the bag bottom to the bag opening and thereby results in providing strength against a failure resulting from the lifting of a loaded bag from the top.

It is understood that the term "film" is not intended to be limiting and includes sheets, tubes, straws and the like.

We wish it to be understood that we do not desire to be limited to the exact details of construction shown and described, for obvious modifications will occur to a person skilled in the art.

## Claims

1. A flexible co-extruded three layer film characterised by outer layers of high pressure, low density, polyethylene and a core layer of low pressure, low density polyethylene, said film having been produced by a conventional blown film tubular extrusion process at a throughput rate of from about 4 pounds (1.81 kg) to about 25 pounds (11.34 kg) per hour per inch (2.54 cm) of die at a process temperature of from about 350°F (177°C) to about 600°F (316°C), and is free of melt fracture.

2. A film as claimed in claim 1, characterised in that the thickness of each of the outside layers is from about 0.18 mil (0.0046 mm) to about 0.35 mil (0.0089 mm).

3. A film as claimed in claim 1 or 2, characterised in that the ratio of the thicknesses of the respective layers is 1:3:1.

4. A film as claimed in any one of claims 1 to 3, characterised in that the overall film thickness is from about 1.0 mil (0.025 mm) to about 3.0 mils (0.076 mm).

5. A film as claimed in any one of claims 1 to 4, characterised in that the overall film thickness is about 1.5 mils (0.038 mm).

6. A film as claimed in any one of claims 1 to 5, characterised in that the film tensile strength in the transverse direction is higher than the tensile strength in the transverse direction for a control three layer film in which the core layer is the same high pressure low density polyethylene as the outer layers, said control three layer film being otherwise identical to said claimed film.

7. A film as claimed in claim 1, characterised in that the ratio of the thicknesses of the respective layers is 1:3:1, the overall film thickness is about 1.5 mils (0.0038 cm), and the film tensile strength in the transverse direction is at least about 4.0 lbs (1.81 kg) per inch (2.54 cm).

8. A bag formed from the film claimed in any one of claims 1 to 7, characterised in that the film has been produced at a throughput rate of from about 4 pounds (1.81 kg) to about 20 pounds (9.07 kg) per hour per inch (2.54 cm) of die at a process temperature of from about 350°F (177°C) to about 470°F (243°C).

9. A bag, characterised by being formed from the film claimed in any one of claims 1 to 7.

**Revendications**

1. Feuille flexible à trois couches co-extrudée, caractérisée par des couches extérieures de polyéthylène à haute pression, basse densité et une couche d'âme en polyéthylène à basse pression, basse densité, ladite feuille ayant été produite par un procédé classique d'extrusion d'une gaine tubulaire gonflée à un débit d'environ 1,81 kg (4 pounds) à environ 11,34 kg (25 pounds) par heure par longueur de 2,54 cm (un inch) de filière, à une température de travail d'environ 177°C (350°F) à environ 316°C (600°F), et est exempte de rupture d'extrudat.

2. Feuille selon la revendication 1, caractérisée en ce que l'épaisseur de chacune des couches extérieures est comprise entre environ 0,0046 mm (0,18 mil) et environ 0,0089 mm (0,35 mil).

3. Feuille selon la revendication 1 ou 2, caractérisée en ce que le rapport des épaisseurs des couches respectives est 1:3:1.

4. Feuille selon l'une quelconque des revendications 1 à 3, caractérisée en ce que l'épaisseur globale de la feuille est d'environ 0,025 mm (1.0 mil) à environ 0,076 mm (3,0 mils).

5. Feuille selon l'une quelconque des revendications 1 à 4, caractérisée en ce que l'épaisseur globale de la feuille est d'environ 0,038 mm (1,5 mil).

6. Feuille selon l'une quelconque des revendications 1 à 5, caractérisée en ce que la résistance à la rupture en traction de la feuille dans la direction transversale est supérieure à la résistance à la rupture en traction dans la direction transversale d'une feuille témoin à trois couches dans laquelle la couche d'âme est du même polyéthylène à haute pression, basse densité que les couches extérieures, ladite feuille témoin à trois couches étant par ailleurs identique à ladite feuille revendiquée.

7. Feuille selon la revendication 1, caractérisée en ce que le rapport des épaisseurs des couches respectives est 1:3:1, l'épaisseur globale de la feuille est d'environ 0,0038 cm (1,5 mils), et la résistance à la rupture en traction dans la direction transversale est d'au moins environ 1,81 kg (4,0 lbs) par longueur de 2,54 cm (1 inch).

8. Sac forméde la feuille selon l'une quelconque des revendications 1 à 7, caractérisé en ce que la feuille a été produite à un débit d'environ 1,81 kg (4 pounds) à environ 9,07 kg (20 pounds) per heure par longueur de 2,54 cm (1 inch) de filière à une température de travail d'environ 177°C (350°F) à environ 243°C (470°F).

9. Sac, caractérisé comme étant formé de la feuille selon l'une quelconque des revendications 1 à 7.

**Patentansprüche**

1. Flexible, zusammenextrudierte Dreischichtfolie, gekennzeichnet durch Außenschichten aus Hochdruckpolyäthylen niedriger Dichte und eine Kernschicht aus Niederdruckpolyäthylen niedriger Dichte, wobei die Folie nach einem herkömmlichen Schlauchspritzblasverfahren bei einer Durchsatzgeschwindigkeit von etwa 4 lbs (1,81 kg) bis etwa 25 lbs (11,34 kg) je Stunde und je Zoll (2,54 cm) Düsenlänge bei einer Verarbeitungstemperatur von etwa 350°F (177°C) bis etwa 600°F (316°C) hergestellt worden und frei von Schmelz-Bruch ist.

2. Folie nach Anspruch 1, dadurch gekennzeichnet, daß die Dicke jeder der Außenschichten von etwa 0,18 mil (0,0046 mm) bis etwa 0,35 mil (0,0089 mm) beträgt.

3. Folie nach Anspruch 1 oder 2, dadurch gekennzeichnet, daß das Verhältnis der Dicken der einzelnen Schichten 1:3:1 beträgt.

**0 032 629**

4. Folie nach irgendeinem der Ansprüche 1—3 dadurch gekennzeichnet, daß die Gesamtfoliendicke von etwa 1,0 mil (0,025 mm) bis etwa 3,0 mil (0,076 mm) beträgt.

5. Folie nach irgendeinem der Ansprüche 1—4, dadurch gekennzeichnet, daß die Gesamtfoliendicke etwa 1,5 mil (0,038 mm) beträgt.

6. Folie nach irgendeinem der Ansprüche 1—5, dadurch gekennzeichnet, daß die Folienreißfestigkeit in Querrichtung höher ist als die Reißfestigkeit in Querrichtung einer Dreischichtvergleichsfolie, bei der die Kernschicht aus dem gleichen Hochdruckpolyäthylen niedriger Dichte besteht wie die Außenschichten, die im übrigen aber mit der beanspruchten Folie identische ist.

7. Folie nach Anspruch 1, dadurch gekennzeichnet, daß das Verhältnis der Dicken der einzelnen Schichten 1:3:1, die Gesamtfoliendicke ungefähr 1,5 mil (0.0038 cm) und die Zugfestigkeit der Folie in Querrichtung wenigstens ungefähr 4,0 lbs (1,81 kg) pro Zoll (2.54 cm) beträgt.

8. Beutel, hergestellt aus der Folie, wie in einem der Ansprüche 1—7 beansprucht, dadurch gekennzeichnt, daß die Folie mit einer Durchsatzrate von ungefähr 4 lbs (1,81 kg) bis etwa 20 lbs (9,07 kg) je Stunde und je Zoll (2,54 cm) Düsenlänge bei einer Verarbeitungstemperatur von etwa 350°F (177°C) bis etwa 470°F (243°C) hergestellt worden ist.

9. Beutel, dadurch gekennzeichnet, daß er aus der Folie hergestellt ist, wie sie in irgendeinem der Ansprüche 1—7 beansprucht ist.

6